# EUROPÄISCHE PATENTSCHRIFT

(11) **EP 4 494 955 B1**
(45) Veröffentlichungstag und Bekanntmachung des Hinweises auf die Patenterteilung: **08.04.2026**
(21) Anmeldenummer: 24189066.4
(22) Anmeldetag: 17.07.2024
(51) Int. Cl.: B60T 13/66, B60T 13/68, B60T 17/22, F16D 63/00, B60T 1/00

(54) **BREMSSYSTEM FÜR EIN KRAFTFAHRZEUG**
BRAKE SYSTEM FOR A MOTOR VEHICLE
SYSTÈME DE FREINAGE POUR VÉHICULE AUTOMOBILE

(30) Priorität: 21.07.2023 DE 102023206957
(43) Veröffentlichungstag der Anmeldung: 22.01.2025
(73) Patentinhaber: ZF CV Systems Global GmbH, 3006 Bern (CH)
(72) Erfinder: Brutt, Mirko, 31832 Springe (DE); Haverkamp, Michael, 30455 Hannover (DE)
(74) Vertreter: ZF Friedrichshafen AG

(56) Entgegenhaltungen:
- EP-A1- 3 536 570
- EP-A1- 3 954 591
- EP-B1- 3 365 207
- DE-A1- 102005 024 343
- US-A1- 2018 194 332

## Beschreibung

Die Erfindung betrifft ein Bremssystem für ein Kraftfahrzeug.

Aus der DE 10 2020 121 082 A1 ist eine elektronisch steuerbare, druckmittelbetriebene Sekundärbremsanlage eines Nutzfahrzeugs bekannt. Die Sekundärbremsanlage umfasst Federspeicherbremszylinder und ein elektronisch steuerbares Bremssteuerventil, mittels dem die Bremskraft der Federspeicherbremszylinder durch eine Druckmittelzufuhr reduzierbar und durch eine Druckmittelabfuhr vergrößerbar ist. Weiterhin umfasst die Sekundärbremsanlage eine elektronische Bremssteuereinheit zur Steuerung des Bremssteuerventils in Abhängigkeit von einem aktuellen Wert eines Bremswertsignals. Ein Druckmitteleingang des Bremssteuerventils ist über eine Vorratsleitung mit einer Druckmittelquelle, ein Druckmittelausgang des Bremssteuerventils mit einer Druckmittelsenke und ein Arbeitsanschluss des Bremssteuerventils über eine Arbeitsleitung mit den Federspeicherbremszylindern verbunden. Zudem sind in der Arbeitsleitung ein 3/2-Wege-Magnetschaltventil und ein in Richtung zu dem Bremssteuerventil sperrendes Rückschlagventil angeordnet.

Ferner ist gemäß der DE 10 2020 121 082 A1 über das 3/2-Wege-Magnetschaltventil ein Steuereingang des Rückschlagventils wechselweise mit der Druckmittelquelle oder einem drucklosen hydraulischen Sammelbehälter verbindbar, sodass das Rückschlagventil in Richtung des Bremssteuerventils geöffnet/geschlossen ist, wenn das 3/2-Wege-Magnetschaltventil bestromt/unbestromt ist. An die Arbeitsleitung ist über eine Druckleitung eine Handpumpe angeschlossen, mittels der im Falle eines Defektes des 3/2-Wege-Magnetschaltventils Hydrauliköl manuell aus einem drucklosen hydraulischen Sammelbehälter in die Federspeicherbremszylinder gefördert werden kann. Für das 3/2-Wege-Magnetschaltventil ist keine Redundanz vorgesehen, sodass bei dessen unbeabsichtigtem Öffnen die Federspeicherbremszylinder über das Rückschlagventil und das Bremssteuerventil entlüftet werden. Die EP 3 536 570 B1 hingegen weist eine Redundanz in Form eines Steuerventils und eines Redundanzventil für ein Feststellbremsmodul auf. Dies erhöht die Sicherheit bei elektrischen Ausfällen, erfordert aber weiterhin eine mechanische Schnittstelle in der Kabine, um den Druck aus den Federspeicherbremszylinder abzulassen.

Um eine Redundanz herzustellen sind weiterhin Lösungen mit bistabilen Ventilen und redundanten Steuergeräten bekannt. Bistabile Ventile verharren typischerweise im Falle eines elektrischen oder mechanischen Ausfalls in einer Position. Dadurch ist keine Notlauffunktion bei einer fälschlich betätigten Parksperre möglich. Im Falle einer fälschlich deaktivierten Feststellbremse benötigt der Fahrer auch bei dieser Lösung eine mechanische Schnittstelle zum manuellen Lösen des Drucks. Redundante Steuergeräte erfordern zusätzliche Kosten für ein zweites Steuergerät und Softwareentwicklung. Diese Lösung ergibt nur Sinn, wenn bereits zwei Steuergeräte im Fahrzeug verwendet werden.

Eine Aufgabe der vorliegenden Erfindung kann darin gesehen werden, ein Bremssystem mit reduzierter Hardware- und Software-Komplexität bereitzustellen. Dabei soll das Bremssystem bei einem unbeabsichtigt verklemmten Ventil sicherstellen, dass eine Parksperre aktiviert werden kann. Die Aufgabe wird gelöst durch den Gegenstand des unabhängigen Anspruchs 1. Vorteilhafte Ausführungsformen sind Gegenstand der Unteransprüche, der folgenden Beschreibung sowie der Figuren. Die vorliegende Erfindung stellt ein Bremssystem für ein Kraftfahrzeug bereit. Das Bremssystem umfasst ein als Steuerventil ausgebildetes erstes Wegeventil, ein als Redundanzventil ausgebildetes zweites Wegeventil und ein als Bremsventil ausgebildetes drittes Wegeventil. Weiterhin umfasst das Bremssystem einen Bremszylinder. Die Erfindung wird im Folgenden im Zusammenhang überwiegend mit einem Bremszylinder beschrieben. Diese Ausführungen gelten sinngemäß jedoch auch für mehrere solcher Bremszylinder, die insbesondere parallel mit dem Bremsventil verbunden sein können. Der Bremszylinder bzw. dessen Kolbenstange ist mit einer Parksperre insbesondere mechanisch verbunden. In alternativen Ausführungen weist das Bremssystem kein als Redundanzventil ausgebildetes zweites Wegeventil auf. Ferner umfasst das Bremssystem eine Druckmittelquelle. Die Druckmittelquelle (z.B. ein Tank oder Akkumulator) ist dazu eingerichtet, ein Druckmittel auszugeben. Wenn die Zündung des Kraftfahrzeugs eingeschaltet ist, kann ein Antriebsmotor des Kraftfahrzeugs eine Befüllung der Druckmittelquelle bewirken. Bei dem Druckmittel kann es sich um ein pneumatisches Druckmittel (z.B. Druckluft) oder um ein hydraulisches Druckmittel (z.B. Öl) handeln. Somit kann es sich bei dem Bremssystem ebenfalls um ein pneumatisches oder um ein hydraulisches Bremssystem handeln. Außerdem umfasst das Bremssystem eine elektronische Steuerungseinheit, eine Parksperre und einen drucklosen Tank. Die Parksperre ist dazu eingerichtet, wenigstens ein Rad des Kraftfahrzeugs festzustellen, wenn und solange die Parksperre aktiviert ist. Insbesondere kann eine mechanische Parksperre das wenigstens eine Rad des Kraftfahrzeugs feststellen, wobei die mechanische Parksperre durch eine Parksperrenfeder derart vorgespannt wird, dass die Parksperre aktiviert ist. Der Kolbenschieber des Bremszylinders kann die Vorspannung der Parksperrenfeder aufheben, sodass die Parksperrenfunktion deaktiviert wird. Dazu muss innerhalb des Bremszylinders ein Deaktivierungsdruck aufgebaut werden.

Wenn die Parksperre im Normalbetrieb gelöst werden soll, insbesondere wenn sich die elektronische Steuerungseinheit in einem aktiven Zustand befindet, dann sind sowohl das Steuerventil als auch das Redundanzventil aktiviert, sodass sie sich in einem geöffneten Zustand befinden. Das Steuerventil und das Redundanzventil versorgen dann das Bremsventil mit Druck bzw. Druckmittel. Bei dem Bremsventil handelt es sich insbesondere um ein normalerweise geöffnetes Proportionalventil (Druckabbau bei Aktivierung), insbesondere ein 3/3-Wegeventil. Das Bremsventil ist nicht aktiviert, d. h. es leitet den Druck an den Bremszylinder weiter, wenn es sich in dem geöffneten Zustand befindet. Der Druckstatus kann über einen Drucksensor überwacht werden. Der Druck baut sich innerhalb des Bremszylinders auf, bis insbesondere eine Federkraftbremse vollständig gelöst ist. Das Steuerventil und das Redundanzventil bleiben permanent aktiv, solange die Parksperre gelöst ist, d.h. während der Fahrt. In diesem Sinne ist in dem erfindungsgemäßen Bremssystem vorgesehen, dass das Steuerventil und das Redundanzventil in einem geschlossenen Zustand mechanisch vorgespannt sind, wohingegen das Bremsventil in einem geöffneten Zustand mechanisch vorgespannt ist. Die elektronische Steuerungseinheit ist dazu eingerichtet, das Steuerventil und das Redundanzventil derart zu steuern, dass sie sich entgegen der mechanischen Vorspannung in einen geöffneten Zustand begeben. Dadurch wird Druckmittel aus der Druckmittelquelle über das Steuerventil und das Redundanzventil sowie stromabwärts über das in dem geöffneten Zustand mechanisch vorgespannte Bremsventil in den Bremszylinder geleitet. Das Druckmittel baut in dem Bremszylinder einen Deaktivierungsdruck auf, sodass die Parksperre deaktiviert wird.

Bei einem mechanischen Defekt an dem Steuerventil oder an dem Redundanzventil, was zu einer verklemmten Öffnungsstellung des betreffenden Ventils führt, kann der Druck an dem Bremszylinder bei Betätigung der Feststellbremse nicht über das verklemmte Ventil abgelassen werden. Solange die Zündung eingeschaltet ist oder die elektronische Steuerungseinheit zur Steuerung der einzelnen Geräte unter Spannung steht, kann dieser Druck in dem Bremszylinder durch Öffnen des Bremsventils unter Überwindung der ständigen Versorgung durch das defekte Ventil abgebaut werden. In diesem Sinne ist die elektronische Steuerungseinheit des erfindungsgemäßen Bremssystems dazu eingerichtet, das Bremsventil derart zu steuern, dass es sich in einen geschlossenen Zustand begibt, sodass Druckmittel aus dem Bremszylinder über das Bremsventil direkt in den drucklosen Tank abfließt und kein Druckmittel über das Steuerventil oder über das Redundanzventil sowie das Bremsventil in den Bremszylinder geleitet wird, wenn das Steuerventil oder das Redundanzventil aufgrund eines mechanischen Defekts in dem geöffneten Zustand verharrt, obwohl es sich in dem geschlossenen Zustand befinden sollte.

Wenn nun die elektronische Steuerungseinheit abgeschaltet werden soll, dann würde auch das Bremsventil abgeschaltet, wodurch der Bremszylinder wieder mit Druck beaufschlagt und die Feststellbremse gelöst würde. Um eine solch riskante Situation zu vermeiden, ist ein insbesondere durch Software implementierter Mechanismus vorgesehen, welcher das Bremsventil abwechselnd öffnet und schließt. Wenn die Zündung des Kraftfahrzeugs ausgeschaltet ist, sodass der Motor zum Antrieb des Kraftfahrzeugs nicht länger läuft, dann wird die Kammer des Bremszylinders abwechselnd gefüllt, bedruckt und wieder entlüftet, sodass die Druckmittelquelle (Tank oder Speicher), welche das Feststellbremssystem speist, entleert wird, bis ein festgelegter Grenzwertdruck, z.B. der Deaktivierungsdruck, innerhalb des Bremszylinders nicht länger erreicht wird. In diesem Sinne ist gemäß einer Ausführungsform vorgesehen, dass die elektronische Steuerungseinheit dazu eingerichtet ist, das Bremsventil derart zu steuern, dass es sich abwechselnd in den geöffneten und in den geschlossenen Zustand begibt, wenn eine Zündung des Kraftfahrzeugs ausgeschaltet ist. Dadurch wird der Bremszylinder abwechselnd gefüllt und entleert, bis die Druckmittelquelle derart entleert ist, dass der Druck innerhalb des Bremszylinders während seiner Befüllung nicht länger einen festgelegten Grenzwertdruck erreicht. Die elektronische Steuerungseinheit ist dabei insbesondere dazu eingerichtet, sich abzuschalten, wenn der Druck innerhalb des Bremszylinders während seiner Befüllung nicht länger den Grenzwertdruck erreicht.

Während der Bremszylinder mit Druck beaufschlagt wird, kann über einen Drucksensor ein ausreichend niedriges Druckniveau des Speichers festgestellt werden. Wird ein bestimmter Schwellenwert erreicht, der einen sicheren Stillstand des Fahrzeugs ermöglicht, kann die elektronische Steuerungseinheit abgeschaltet werden. In diesem Sinne ist gemäß einer weiteren Ausführungsform vorgesehen, dass das Bremssystem ferner einen Drucksensor umfasst, der dazu eingerichtet ist, einen Leitungsdruck innerhalb einer Leitung zu messen, welche das Bremsventil mit dem Bremszylinder verbindet, wobei die Prozessoreinheit dazu eingerichtet ist, auf den von dem Drucksensor gemessenen Leitungsdruck zuzugreifen und sich abzuschalten, wenn der Leitungsdruck während der Befüllung des Bremszylinders den vorgegebenen Grenzwert nicht länger erreicht.

Gemäß einer weiteren Ausführungsform ist vorgesehen, dass das Bremssystem weiterhin eine elektronische Verriegelungseinheit umfasst, wobei das Steuerventil sich durch die mechanische Vorspannung in den geschlossenen Zustand begibt, wenn sich die elektronische Steuerungseinheit in einem inaktiven Zustand befindet, sodass kein Druckmittel aus der Druckmittelquelle über das Steuerventil in Richtung des Bremsventils geleitet wird. Dementsprechend wird auch kein Druckmittel über das Steuerventil und das Bremsventil in den Bremszylinder geleitet, um darin den Deaktivierungsdruck aufzubauen, sodass die Parksperre deaktiviert wird.

Unter dem Merkmal "inaktiver Zustand" kann insbesondere verstanden werden, dass die elektronische Steuerungseinheit nicht länger das Steuerventil, das Redundanzventil und das Bremsventil steuern kann. Insbesondere wird eine Bestromung von Elektromagneten des Steuerventils, Redundanzventils und Bremsventils nicht länger durch die elektronische Steuerungseinheit gesteuert, wenn sich die elektronische Steuerungseinheit in dem inaktiven Zustand befindet. Die elektronische Steuerungseinheit befindet sich insbesondere dann in einem inaktiven Zustand, wenn sie bei Auftreten eines Fehlers ausfällt. Dahingegen kann unter dem Merkmal "aktiver Zustand" verstanden werden, dass die elektronische Steuerungseinheit das Steuerventil, das Redundanzventil und das Bremsventil steuert. Insbesondere wird eine Bestromung von Elektromagneten des Steuerventils, Redundanzventils und Bremsventils durch die elektronische Steuerungseinheit gesteuert, wenn sich die elektronische Steuerungseinheit in dem aktiven Zustand befindet. Die elektronische Steuerungseinheit befindet sich insbesondere dann in einem aktiven Zustand, wenn die Zündung des Kraftfahrzeugs eingeschaltet ist und bei dem Betrieb der elektronischen Steuerungseinheit kein Fehler auftritt, der zu einem Ausfall der elektronischen Steuerungseinheit führt.

Die elektronische Verriegelungseinheit ist, wenn sich die elektronische Steuerungseinheit in dem inaktiven Zustand befindet, dazu eingerichtet ist, das Redundanzventil derart zu steuern, dass das Redundanzventil in den geöffneten Zustand versetzt wird, wodurch Druckmittel aus der Druckmittelquelle über das Redundanzventil und über das in dem geöffneten Zustand mechanisch vorgespannte Bremsventil in den Bremszylinder geleitet wird und in dem Bremszylinder den Deaktivierungsdruck aufbaut, sodass die Parksperre deaktiviert wird. Dadurch wird zum einen eine unbeabsichtigte Aktivierung einer Parkbremsfunktion verhindert, und zwar ohne den Einsatz von zwei Steuergeräten bei gleichzeitiger korrekter Reaktion im Falle eines Ausfalls der elektronischen Steuerungseinheit. Zum anderen ermöglicht das Bremssystem dem Fahrer, bei dem Ausfall der zentralen elektronischen Steuerungseinheit, die Parksperre ohne eine zusätzliche mechanische Schnittstelle zu aktivieren.

Die elektronische Verriegelungseinheit ist insbesondere dazu eingerichtet, ein Normalbetrieb-Steuerungssignal zu speichern, welches einen letzten gültigen Betriebszustand des Steuerventils enthält, bevor der Zustand der elektronischen Steuerungseinheit inaktiv geworden ist. Der letzte gültige Betriebszustand des Steuerventils enthält insbesondere die Information, dass das Steuerventil sich in dem geöffneten Zustand befindet. Wenn sich das Steuerventil in dem geöffneten Zustand befindet, dann wird Druckmittel aus der Druckmittelquelle über das Steuerventil und das Bremsventil in den Bremszylinder geleitet und baut dort den Deaktivierungsdruck auf, sodass die Parksperre deaktiviert wird. Weiterhin kann die elektronische Verriegelungseinheit dazu eingerichtet sein, wenn sich die elektronische Steuerungseinheit in dem inaktiven Zustand befindet, das Redundanzventil basierend auf dem Normalbetrieb-Steuerungssignal derart zu steuern, dass das Redundanzventil in den geöffneten Zustand versetzt wird. Wenn sich das Redundanzventil in dem geöffneten Zustand befindet, dann wird Druckmittel aus der Druckmittelquelle über das Redundanzventil und das Bremsventil in den Bremszylinder geleitet und baut dort den Deaktivierungsdruck auf, sodass die Parksperre deaktiviert wird.

Der Fahrer des Kraftfahrzeugs kann das Kraftfahrzeug zum Stillstand bringen, wenn die elektronische Steuerungseinheit ausfällt, indem er die Betriebsbremse betätigt. Die Parksperre kann der Fahrer anschließend von seinem Fahrersitz aus betätigen, indem er die Zündung des Kraftfahrzeugs ausschaltet. Die Funktion der elektronischen Verriegelungseinheit kann dabei von einem Status der Zündung abhängig sein, wobei die elektronische Verriegelungseinheit prüfen kann, ob Strom durch einen entsprechender Pin ("TRM15") an einer elektronischen (Haupt-)Steuerungseinheit des Kraftfahrzeugs fließt oder nicht. Wenn die elektronische Verriegelungseinheit feststellt, dass die Zündung des Kraftfahrzeugs ausgeschaltet ist, dann kann sie das Redundanzventil deaktivieren, sodass sich das Redundanzventil in einen geschlossenen Zustand begibt. Wenn sich das Redundanzventil in dem geschlossenen Zustand befindet, dann entweicht der Druck aus dem Bremszylinder über das deaktivierte Bremsventil zurück zum nun deaktivierten Redundanzventil in einen drucklosen Tank. In diesem Sinne ist gemäß einer weiteren Ausführungsform vorgesehen, dass die Verriegelungseinheit - wenn sich die elektronische Steuerungseinheit in dem inaktiven Zustand befindet und wenn die Zündung des Kraftfahrzeugs ausgeschaltet ist, dazu eingerichtet ist - das Redundanzventil derart zu steuern, dass das Redundanzventil in den geschlossenen Zustand versetzt wird, sodass kein Druckmittel aus der Druckmittelquelle über das Redundanzventil in Richtung des Bremsventils geleitet wird. Stattdessen wird Druckmittel aus dem wenigstens einen Bremszylinder über das Bremsventil und das Redundanzventil in den drucklosen Tank abgelassen, sodass der Deaktivierungsdruck innerhalb des wenigstens einen Bremszylinders abgebaut und die Parksperre aktiviert wird.

Das Redundanzventil ist insbesondere als ein Proportionalventil ausgeführt. Die Geschwindigkeit der Aktivierung der Feststellbremse kann begrenzt werden, indem der Durchfluss von dem Redundanzventil zum Tank absichtlich eingeschränkt wird. Auf diese Weise kann ein potenzieller Fehlgebrauch durch den Fahrer, der während der Fahrt einen Zündzyklus durchführt, während beispielsweise eine rote Warnlampe leuchtet, eingedämmt werden. In diesem Sinne ist gemäß einer weiteren Ausführungsform vorgesehen, dass die elektronische Verriegelungseinheit dazu eingerichtet ist, das Redundanzventil derart zu steuern, dass ein Volumenstrom Druckmittel, der über das Redundanzventil in den drucklosen Tank abgelassen wird, eingeschränkt wird, wenn das Redundanzventil in den geschlossenen Zustand versetzt wird.

Um den Effekt einer Sekundärbremse zu ermöglichen, kann das Bremsventil derart angesteuert werden, dass der Druck zur Erreichung einer gewünschten Sekundärbremskraft auf ein dazu erforderliches Niveau reduziert wird. Das Lösen der Sekundärbremse kann durch erneutes Erhöhen des Drucks erfolgen, indem das Bremsventil deaktiviert wird. Das Steuerventil und das Redundanzventil sind während der Betätigung der Sekundärbremse aktiv, nehmen aber nicht an dieser Funktion teil. In diesem Sinne ist gemäß einer weiteren Ausführungsform vorgesehen, dass die elektronische Steuerungseinheit dazu eingerichtet ist, das Steuerventil und das Redundanzventil in den geöffneten Zustand zu versetzen. Weiterhin ist die elektronische Steuerungseinheit dazu eingerichtet, das Bremsventil derart zu steuern, dass genügend Druckmittel, das aus der Druckmittelquelle über das Steuerventil und das Redundanzventil zu dem Bremsventil geleitet worden ist, über das Bremsventil in den Bremszylinder gelangt und dort einen Sekundärbremsdruck aufbaut, der dazu führt, dass die Parksperre eine vorgesehene Sekundärbremskraft erzeugt. Ferner ist die elektronische Steuerungseinheit dazu eingerichtet, das Bremsventil in den geschlossenen Zustand zu versetzen, wenn die Sekundärbremskraft nicht länger erzeugt werden soll.

Wenn die Parksperre im Normalbetrieb betätigt bzw. aktiviert werden soll, d.h. wenn sich die elektronische Steuerungseinheit in einem aktiven Zustand befindet, dann werden das Steuerventil und das Redundanzventil deaktiviert, d.h. in den geschlossenen Zustand versetzt, sodass der Bremszylinder über das deaktivierte Bremsventil entlüftet werden kann. Wenn das Bremsventil deaktiviert ist, befindet es sich in dem geöffneten Zustand, sodass Druckmittel aus dem Bremszylinder über das Bremsventil, das Steuerventil und das Redundanzventil in den drucklosen Tank abfließt. In diesem Sinne ist gemäß einer weiteren Ausführungsform vorgesehen, dass die elektronische Steuerungseinheit dazu eingerichtet ist, das Steuerventil und das Redundanzventil derart zu steuern, dass sie sich in den geschlossenen Zustand begeben. Weiterhin ist die elektronische Steuerungseinheit dazu eingerichtet, das Bremsventil in den geöffneten Zustand zu versetzen, wenn sich die elektronische Steuerungseinheit in dem aktiven Zustand befindet. Dadurch wird Druckmittel aus dem Bremszylinder über das Bremsventil sowie über das Steuerventil und das Redundanzventil in den drucklosen Tank abgelassen, sodass der Deaktivierungsdruck innerhalb des Bremszylinders abgebaut und die Parksperre aktiviert wird.

Falls das Steuerventil und das Redundanzventil einen kleinen Durchfluss aufweisen, kann die Geschwindigkeit der Entleerung des Bremszylinders durch gleichzeitiges Aktivieren des Bremsventils erhöht werden, d.h. indem das Bremsventil in den geschlossenen Zustand versetzt wird. Das Bremsventil entlüftet den Bremszylinder dann direkt in den drucklosen Tank und umgeht so das Steuerventil und das Redundanzventil. In dieser Situation lassen das Steuerventil und das Redundanzventil lediglich das Druckmittel auf dem Weg von dem Steuerventil bzw. dem Redundanzventil zu dem Bremsventil ab, was sehr schnell geht. In diesem Sinne ist gemäß einer weiteren Ausführungsform vorgesehen, dass die elektronische Steuerungseinheit dazu eingerichtet ist, das Bremsventil in den geschlossenen Zustand zu versetzen, wodurch Druckmittel aus dem Bremszylinder über das Bremsventil direkt in den drucklosen Tank abgelassen wird, sodass der Deaktivierungsdruck innerhalb des wenigstens einen Bremszylinders abgebaut und die Parksperre aktiviert wird.

Im Folgenden werden Ausführungsbeispiele der Erfindung anhand der schematischen Zeichnung näher erläutert, wobei gleiche oder ähnliche Elemente mit dem gleichen Bezugszeichen versehen sind. Hierbei zeigt
- Fig. 1: eine Draufsicht auf einen Teil eines Bremssystems für ein Kraftfahrzeug und ein Anhängefahrzeug,
- Fig. 2: eine vergrößerte Darstellung eines Teils des Bremssystems nach Fig. 1 und
- Fig. 3: beispielhafte Zustandsgrößen des Bremssystems nach Fig. 1.

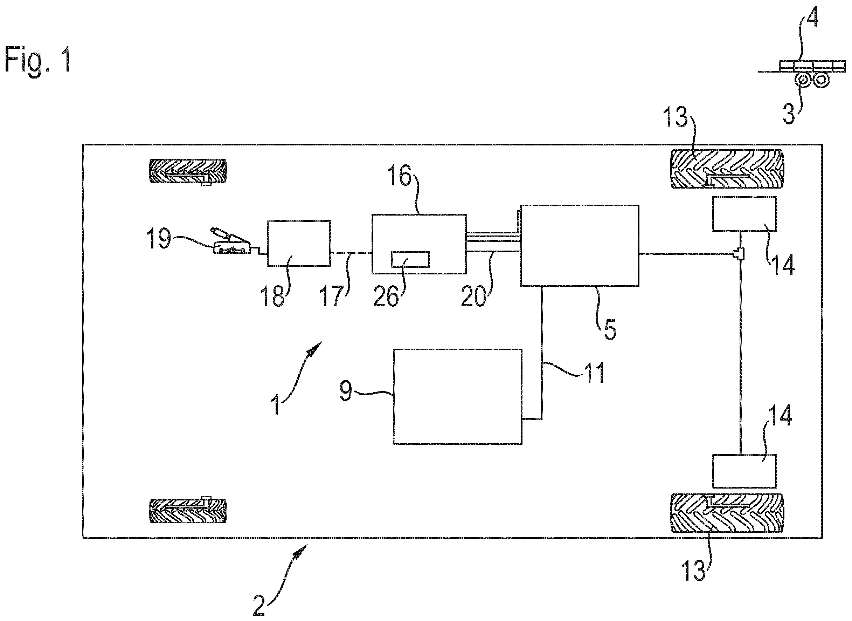

Fig. 1 zeigt einen Teil eines Bremssystems 1 für ein nicht näher dargestelltes Kraftfahrzeug 2. Bei dem Kraftfahrzeug 2 handelt es sich beispielsweise um ein landwirtschaftliche Nutzfahrzeug, insbesondere um einen Traktor. Das Bremssystem 1 erfüllt insbesondere eine Feststell- bzw. Dauerbremsfunktion ("Parkbremsfunktion") von Rädern 13 des Kraftfahrzeugs 2 sowie optional einer in Fig. 1 lediglich angedeuteten Anhängerbremse 3 eines Anhängefahrzeugs 4. Die im Folgenden näher beschriebenen Funktionen können ein Teil einer Traktor-Bremssystem-Plattform sein, der sogenannten EBP-Plattform. Die EBP-Plattform soll den sicheren Betrieb des Bremssystems 1 bei verschiedenen Ausfallszenarien gewährleisten.

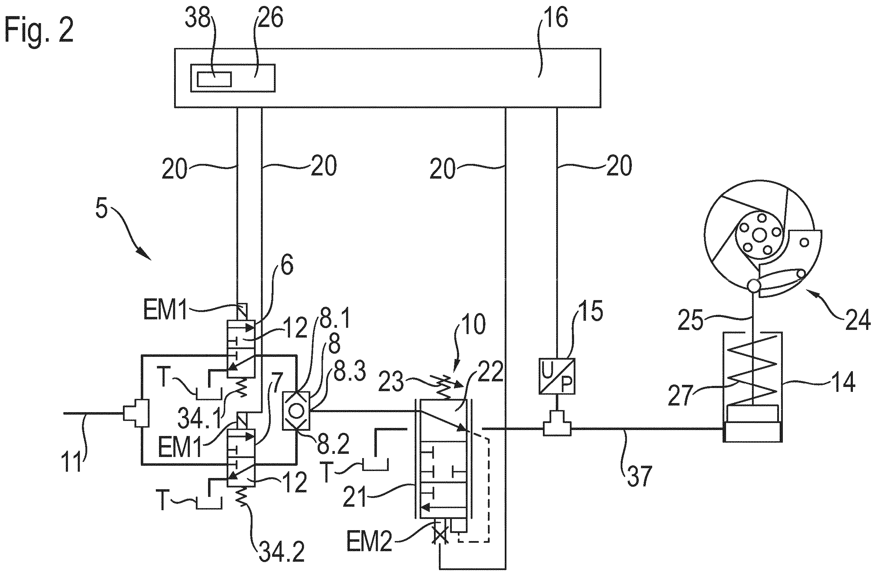

Das Bremssystem 1 umfasst ein elektronisch steuerbares Festellbremsmodul 5, von dem Details in Fig. 2 dargestellt sind. So umfasst das Feststellbremsmodul 5 ein als Steuerventil 6 ausgebildetes erstes 3/2-Wegeventil, ein als Redundanzventil 7 ausgebildetes zweites 3/2-Wegeventil, ein druckgesteuertes Wechselventil 8 und ein als Bremsventil 10 ausgeführtes 3/3-Proportionalwegeventil. Das Feststellbremsmodul 5 wird eingangsseitig über eine Versorgungsleitung 11 von einer Druckmittelquelle 9 mit Druckmittel versorgt, in dem gezeigten Ausführungsbeispiel mit hydraulischem Druckmittel. Das Steuerventil 6 und das Redundanzventil 7 sind in einer hydraulischen Parallelschaltung jeweils eingangsseitig über die Versorgungsleitung 11 mit der Druckmittelquelle 9 verbunden. Unter dem Merkmal "verbunden" ist insbesondere zu verstehen, dass die jeweils miteinander verbundenen Elemente hydraulisch oder pneumatisch leitend miteinander verbunden sind, d.h. dass sich ein Druckmittel, z.B. Luft oder eine Hydraulikflüssigkeit, insbesondere Öl, von dem einen Element zu dem anderen Element kann und ggfs. umgekehrt.

Bei dem Steuerventil 6 und bei dem Redundanzventil 7 handelt es sich in dem gezeigten Ausführungsbeispiel um Gleichteile, was jedoch nicht zwingend ist. Ein Ventilschieber 12 des Steuerventils 6 und des Redundanzventils 7 sind jeweils in einem nicht dargestellten Ventilgehäuse durch ein Federelement 34.1, 34.2 in einer durch Fig. 2 gezeigten geschlossenen Schaltstellung vorgespannt ("normally closed"), welche einem geschlossenen Zustand des Steuerventils 6 und des Redundanzventils 7 entspricht. Wenn sich das Steuerventil 6 und das Redundanzventil 7 in dem geschlossenen Zustand befinden, dann wird kein Druckmittel aus der Druckmittelquelle 9 über das Steuerventil 6 und das Redundanzventil 7 in Richtung des Wechselventils 8, des weiter stromabwärts angeordneten Bremsventils 10 und eines Bremszylinders 14 geleitet. Die Ventilschieber 12 des Steuerventils 6 und des Redundanzventils 7 können durch Bestromen eines ersten Elektromagneten EM1 aus der geschlossenen Schaltstellung in eine geöffnete Schaltstellung verschoben werden, welche einem geöffneten Zustand des Steuerventils 6 und des Redundanzventils 7 entspricht. Das Bestromen des ersten Elektromagneten EM1 erfolgt durch eine elektronische Steuerungseinheit 16. Wenn sich das Steuerventil 6 und das Redundanzventil 7 in dem geöffneten Zustand befinden, dann wird Druckmittel aus der Druckmittelquelle 9 über das Steuerventil 6 und das Redundanzventil 7 geleitet und kann über das Wechselventils 8 sowie das weiter stromabwärts angeordnete Bremsventil 10 in den Bremszylinder 14 geleitet werden.

Ausgangsseitig sind das Steuerventil 6 und das Redundanzventil 7 jeweils mit einem Eingang 8.1, 8.2 des Wechselventils 8 verbunden, sodass der jeweils höhere Druck der beiden Ventile 6, 7 über einen Ausgang 8.3 des Wechselventils 8 ausgegeben wird, um über das Bremsventil 10 zwei jeweils einem Rad 13 zugeordnete, federbelastete Bremszylinder 14 mit Druckmittel zu versorgen. Optional kann auch die Anhängerbremse 3 mit Druck zu versorgt werden. Wenn das Steuerventil 6 ausfällt, dann kann der Druck des Redundanzventils 7 weiter genutzt werden, sofern das Redundanzventil 7 nicht ausgefallen ist. Wenn das Redundanzventil 7 ausfällt, dann kann der Druck des Steuerventils 6 weiter genutzt werden, sofern das Steuerventil 6 nicht ausgefallen ist. Ein Drucksensor 15 misst den über das Bremsventil 10 ausgegebenen Druck und übermittelt den gemessenen Druck an die elektronische Steuerungseinheit 16 des Bremssystems 1.

Das Bremsventil 10 weist ein Ventilgehäuse 21, einen Ventilschieber 22, ein Federelement 23 und einen zweiten Elektromagneten EM2 auf. Der Ventilschieber 22 des Bremsventils 10 ist innerhalb des Ventilgehäuse 21 durch das Federelement 23 in einer durch Fig. 2 gezeigten geöffneten Schaltstellung vorgespannt ("normally o-pen"), welche einem geöffneten Zustand des Bremsventils 10 entspricht. Wenn sich das Bremsventil 10 in dem geöffneten Zustand befinden, dann wird Druckmittel, das aus der Druckmittelquelle 9 über das geöffnete Steuerventil 6 und das geöffnete Redundanzventil 7 sowie das Wechselventil 8 geleitet worden ist, über das Bremsventil 10 in den Bremszylinder 14 geleitet. Innerhalb des Bremszylinders 14 baut das Druckmittel einen Deaktivierungsdruck auf, sodass eine Parksperre 24 deaktiviert wird. Fig. 2 zeigt lediglich einen der zwei Bremszylinder 14 nach Fig. 1. Die Ausführungen im Zusammenhang mit der Figurenbeschreibung gelten jedoch sinngemäß jeweils für beide Bremszylinder 14, die in einer hydraulischen Parallelschaltung an das Bremsventil 10 angeschlossen sind.

Eine Kolbenstange 25 des Bremszylinders 14 ist mit der Parksperre 24 mechanisch verbunden. Die Kolbenstange 25 des Bremszylinders 14 ist durch ein Federelement 26 mechanisch derart vorgespannt, dass die Parksperre 24 aktiviert wird, wodurch die Räder 13 festgestellt sind. Der Deaktivierungsdruck wirkt der Vorspannung durch das Federelement 26 entgegen und verschiebt die Kolbenstange 25 derart, dass die Parksperre 24 deaktiviert wird, wodurch die Räder 13 nicht länger festgestellt sind. Die elektronische Steuerungseinheit 16 kann eine Bestromung des zweiten Elektromagneten EM2 des Bremsventils 10 derart steuern, dass der Ventilschieber 22 des Bremsventils 10 aus der geöffneten Schaltstellung über eine Mittelstellung in eine geöffnete Schaltstellung verschoben wird, welche einem geschlossenen Zustand des Bremsventils 10 entspricht. Wenn sich das Bremsventil 10 in dem geschlossenen Zustand befindet, dann kann Druckmittel aus dem Bremszylinder 14 über das Bremsventil 10 in einen drucklosen Tank T abfließen, sodass der Deaktivierungsdruck abgebaut wird und die Parksperre 24 aktiviert wird.

Wenn sich wenigstens einer der Ventilschieber 12 der beiden Ventile 6, 7 in seiner geöffneten Schaltstellung befindet, dann kann ein vorgesehener Druck über das Steuerventil 6 und/oder das Redundanzventil 7 geleitet und über das Wechselventil 8 ausgegeben werden. Die federbelasteten Bremszylinder 14 und die Anhängerbremse 3 können dann über das geöffnete Bremsventil 10 derart betätigt werden, dass die Parksperre 24 entgegen der Federvorspannung gelöst wird. Die Räder 13 des Kraftfahrzeugs 2 und/oder des Anhängefahrzeugs 4 sind dann nicht festgestellt. Wenn sich hingegen beide Ventilschieber der beiden Ventile 6, 7 in ihrer geschlossenen Schaltstellung befinden, dann wird kein Druck über das Steuerventil 6 und das Redundanzventil 7 geleitet und über das Wechselventil 8 sowie das geöffnete Bremsventil 10 ausgegeben. Die federbelasteten Bremszylinder 14 und die Anhängerbremse 3 werden dann nicht wie vorstehend beschrieben bedruckt, sondern werden stattdessen entleert. Die Räder 13 des Kraftfahrzeugs 2 und/oder des Anhängefahrzeugs 4 sind dann festgestellt. Man kann in diesem Zusammenhang davon sprechen, dass die Ventilanordnung 5 eine invertierende Schaltcharakteristik aufweist. Die Parksperre 24 des Kraftfahrzeugs 2 und die Anhängerbremse 3 werden betätigt, wenn über das Bremsventil 10 kein Druck ausgegeben wird, sowie gelöst, wenn über das Bremsventil 10 ein ausreichend hoher Druck ausgegeben wird, der zu dem Deaktivierungsdruck innerhalb des Bremszylinders 14 bzw. in der Anhängerbremse 3 führt.

Fig. 1 zeigt, dass die elektronische Steuerungseinheit 16 des Bremssystems 1 über einen CAN BUS 17 mit einer elektronischen (Haupt-)Steuerungseinheit 18 des Kraftfahrzeugs 2 verbunden sein kann. Die elektronische (Haupt-)Steuerungseinheit 18 des Kraftfahrzeugs 2 ist in dem gezeigten Ausführungsbeispiel insbesondere mit einer Mensch-Maschine-Schnittstelle 19 verbunden. Mittels der Mensch-Maschine-Schnittstelle 19 kann ein Fahrer oder Nutzer des Kraftfahrzeugs 2 den wenigstens einen Bremszylinder 14 des Kraftfahrzeugs 2 und/oder die Anhängerbremse 3 des Anhängefahrzeugs 4 bedienen.

Wenn die Parksperre 24 im Normalbetrieb betätigt bzw. aktiviert werden soll, d.h. wenn sich die elektronische Steuerungseinheit 16 in einem aktiven Zustand befindet, dann werden das Steuerventil 6 und das Redundanzventil 7 deaktiviert, d.h. in den geschlossenen Zustand versetzt, sodass der Bremszylinder 14 über das deaktivierte Bremsventil 10 entlüftet werden kann. Wenn das Bremsventil 10 deaktiviert ist, befindet es sich in dem geöffneten Zustand, sodass Druckmittel aus dem Bremszylinder 14 über das Bremsventil 10, das Wechselventil 8, das Steuerventil 6 und das Redundanzventil 7 in den drucklosen Tank T abfließt.

Falls das Steuerventil 6 und das Redundanzventil 7 einen kleinen Durchfluss aufweisen, kann die Geschwindigkeit der Entleerung des Bremszylinders 14 durch gleichzeitiges Aktivieren des Bremsventils 10 erhöht werden, d.h. indem das Bremsventil 10 in den geschlossenen Zustand versetzt wird. Das Bremsventil 10 entlüftet den Bremszylinder 14 dann direkt in den drucklosen Tank T und umgeht so das Steuerventil 6 und das Redundanzventil 7. In dieser Situation lassen das Steuerventil 6 und das Redundanzventil 7 lediglich das Druckmittel auf dem Weg von dem Steuerventil 6 bzw. von dem Redundanzventil 7 zu dem Bremsventil 10 ab, was sehr schnell geht.

Um den Effekt einer Sekundärbremse zu ermöglichen, steuert die elektronische Steuerungseinheit 16 das Bremsventil 10 derart an, dass der in dem Bremszylinder 14 vorherrschende Druck zur Erreichung einer gewünschten Bremskraft auf ein dazu erforderliches Niveau reduziert wird. Das Lösen der Sekundärbremse kann durch erneutes Erhöhen des Drucks erfolgen, indem die elektronische Steuerungseinheit 16 das Bremsventil deaktiviert. Das Steuerventil 6 und das Redundanzventil 7 sind während der Betätigung der Sekundärbremse aktiv, nehmen aber nicht an dieser Funktion teil.

Es kann der Fall eintreten, dass das Steuerventil 6 und/oder das Redundanzventil 7 einen mechanischen Defekt aufweisen, was zu einer verklemmten Öffnungsstellung des betreffenden Ventils 6 und/oder 7 führt. In diesem Fall kann der Druck innerhalb des Bremszylinders 14 bei einer Betätigung der Parksperre 24 nicht über das verklemmte Ventil 6 und/oder 7 abgelassen werden. Solange die Zündung des Kraftfahrzeugs 2 eingeschaltet ist oder die elektronische Steuerungseinheit 16 zur Steuerung der einzelnen Geräte unter Spannung steht, kann dieser Druck innerhalb des Bremszylinders 14 durch Öffnen des Bremsventils 10 unter Überwindung der ständigen Versorgung durch das defekte Ventil 6 und/oder 7 abgebaut werden. Die elektronische Steuerungseinheit 16 wird dazu den zweiten Elektromagneten EM2 des Bremsventils 10 derart bestromen, dass dessen Ventilschieber 22 in die geschlossene Stellung verschoben wird. Wenn sich der Ventilschieber 22 in der geschlossenen Stellung befindet, dann ist der Bremszylinder 14 über das Bremsventil 10 mit dem drucklosen Tank T verbunden, wohingegen das Steuerventil 6 und das Redundanzventil 7 von dem Bremszylinder 14 getrennt sind. Dadurch fließt Druckmittel aus dem Bremszylinder 14 über das Bremsventil 10 direkt in den drucklosen Tank T des Bremssystems 1 ab. Weiterhin wird kein Druckmittel aus der Druckmittelquelle 9 über das Steuerventil 6 oder Redundanzventil 7, das Wechselventil 8 und das Bremsventil 10 in den Bremszylinder 14 geleitet.

Soll nun auch die elektronische Steuerungseinheit 16 abgeschaltet werden, dann würde der zweite Elektromagnet EM2 des Bremsventils 10 normalerweise nicht länger bestromt. Dadurch ginge das Bremsventil 10 in den vorgespannten Zustand über, d.h. der Ventilschieber 22 würde durch die Feder 23 in die durch Fig. 2 gezeigte geöffnete Schaltstellung verschoben. Somit würde der Bremszylinder 14 wieder mit Druck beaufschlagt und die Feststellbremse 24 gelöst. Um eine solch riskante Situation zu vermeiden, versetzt die elektronische Steuerungseinheit 16 (bevor sie sich selbst abschaltet oder abgeschaltet werden darf) das Bremsventil 10 abwechselnd in den geöffneten und den geschlossenen Zustand. Dies geschieht, wenn die Zündung des Kraftfahrzeug 2 ausgeschaltet ist, sodass der Motor zum Antrieb des Kraftfahrzeugs 1 nicht länger läuft und die Druckmittelquelle nicht länger befüllt wird. Dadurch wird der Bremszylinder 14 abwechselnd gefüllt, bedruckt und wieder entlüftet, sodass die Druckmittelquelle 9, welche den Bremszylinder 14 speist, derart entleert wird, dass innerhalb des Bremszylinders 14 während seiner Befüllung nicht länger der Deaktivierungsdruck erreicht wird.

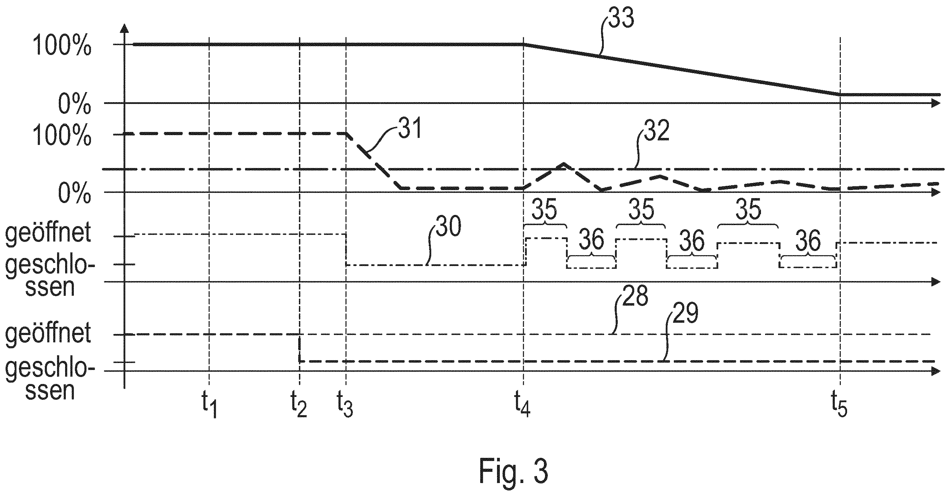

Fig. 3 veranschaulicht das vorstehend beschriebene Szenario in zeitlichen Verläufen von Zustandswerten. So zeigt ein in Fig. 3 unten dargestellter erster Graph 28 den zeitlichen Verlauf des Zustands des Steuerventils 6. Ein weiterer in Fig. 3 unten dargestellter zweiter Graph 29 zeigt den zeitlichen Verlauf des Zustands des Redundanzventils 7. Oberhalb des ersten und zweiten Graphs 28, 29 zeigt ein dritter Graph 30 den zeitlichen Verlauf des Zustands des Bremsventils 10. Oberhalb des dritten Graphs 30 zeigt ein vierter Graph 31 den zeitlichen Verlauf des relativen Drucks (0% entspricht einem drucklosen Zustand 100% einem maximal zulässigen Druck), der innerhalb des Bremszylinders 14 vorherrscht. Weiterhin ist ein Grenzwert 32 für den Druck eingezeichnet. Wenn der Druck, der innerhalb des Bremszylinders 14 vorherrscht, unterhalb des Grenzwerts 32 liegt, dann ist die Parksperre 24 aktiviert. Bei dem Grenzwert 32 kann es sich beispielsweise um den vorstehend beschriebenen Deaktivierungsdruck handeln. Alternativ kann auch ein geringerer Wert gewählt werden, um eine erhöhte Sicherheit gegen ein nicht vorgesehenes Deaktivieren der Parksperre 24 zu verhindern. Oberhalb des vierten Graphs 31 zeigt ein fünfter Graph 32 den zeitlichen Verlauf eines Ausgabedrucks der Druckmittelquelle 9.

Zu einem ersten Zeitpunkt t₁ wird das Kraftfahrzeug 2 gestoppt, z.B. mittels einer Betriebsbremse. Das Steuerventil 6, das Redundanzventil 7 und das Bremsventil 10 verbleiben in ihrem geöffneten Zustand, sodass innerhalb des Bremszylinders 14 weiterhin ein Druck vorherrscht, der oberhalb des Grenzwerts 32 liegt, wodurch die Parksperre 24 deaktiviert bleibt. Zu einem nachfolgenden zweiten Zeitpunkt t₂ wird die Aktivierung der Parksperre 24 eingeleitet, z.B. indem der Fahrer die Mensch-Maschine-Schnittstelle 19 entsprechend bedient. Ab dem zweiten Zeitpunkt t₂ wird das Redundanzventil 7 durch sein Federelement 34.2 aus der geöffneten Schaltstellung in die geschlossene Schaltstellung verschoben. Bei dem Steuerventil 6 funktioniert dies jedoch nicht, weil ein mechanischer Defekt dafür sorgt, dass das Federelement 34.1 des Steuerventils 6 dessen Ventilschieber 12 nicht in die geschlossene Stellung verschieben kann. Das Steuerventil 6 verharrt somit in dem geöffneten Zustand. Das Bremsventil 10 verbleibt wie vorgesehen in seinem geöffneten Zustand. Der Druck 31 innerhalb des Bremszylinders 14 sinkt nicht, da das Steuerventil 6 weiterhin geöffnet ist, sodass Druckmittel aus der Druckmittelquelle 9 weiterhin ungewollt über das Steuerventil 6, das Wechselventil 8 sowie das Bremsventil 10 in den Bremszylinder 14 nachfließt.

Zu einem nachfolgenden dritten Zeitpunkt t₃ erkennt die elektronische Steuerungseinheit 16, dass das Steuerventil 6 sich in dem geöffneten zustand befindet, obwohl es sich zur Aktivierung der Parksperre 24 in dem geschlossenen Zustand befinden sollte. Um dennoch eine Aktivierung der Parksperre 24 zu ermöglichen, bestromt die elektronische Steuerungseinheit 16 den zweiten Elektromagneten EM2 des Bremsventils 10 derart, dass dessen Ventilschieber 22 sich in die geschlossene Schaltstellung bewegt. Dadurch fließt Druckmittel aus dem Bremszylinder 14 über das Bremsventil 10 direkt in den drucklosen Tank T ab. Dadurch fällt der Druck 31 innerhalb des Druckzylinders 14 unter den Grenzwert 32 und die Parksperre 24 wird aktiviert.

Zu einem nachfolgenden vierten Zeitpunkt t₄ wird die Zündung des Kraftfahrzeugs 2 ausgeschaltet, sodass die Druckmittelquelle 9 nicht länger befüllt wird und entleert werden kann. Die elektronische Steuerungseinheit 16 bestromt den zweiten Elektromagneten EM2 des Bremsventils 10 jetzt derart, dass sich dessen Ventilschieber 22 abwechselnd in die geöffnete und geschlossene Schaltstellung bewegt. Dies führt dazu, dass während eines Öffnungszyklus' 35 (in dem das Bremsventil 10 geöffnet ist) Druckmittel aus der sich entleerenden Druckmittelquelle 9 über das weiterhin geöffnete Steuerventil 6, das Wechselventil 8 und das Bremsventil 10 in den Bremszylinder 14 gelangt, sodass sich Druck in dem Bremszylinder 14 aufbaut. Dieser Druck wird in einem auf den Öffnungszyklus 35 folgenden Schließzyklus 36 (in dem das Bremsventil geschlossen ist) wieder abgebaut. Aus Fig. 3 ist ersichtlich, dass während eines ersten Öffnungszyklus' 35 des Bremsventils 10 der Grenzwert 32 noch überschritten wird, bei den darauffolgenden Öffnungszyklen 35 jedoch bereits nicht mehr.

Sobald die elektronische Steuerungseinheit 16 erkennt, dass der Grenzwert 32 während eines Öffnungszyklus' des Bremsventils 10 nicht mehr erreicht wird, kann sie sich zu einem fünften Zeitpunkt t₅ abschalten. In dem durch Fig. 3 gezeigten Ausführungsbeispiel wartet die elektronische Steuerungseinheit 16 noch einen weiteren Öffnungszyklus ab, bevor sie ihre Abschaltung einleitet. Wenn die elektronische Steuerungseinheit 16 abgeschaltet ist, dann befindet sie sich in einem inaktiven Zustand, sodass das Bremsventil 10 in seinen mechanisch vorgespannten geöffneten Zustand versetzt wird. Das Redundanzventil 7 verbleibt in seinem mechanisch vorgespanntem geschlossenen Zustand. Das Steuerventil 6 verbleibt weiterhin in seinem verklemmten geöffneten Zustand. Allerdings wird nicht mehr ausreichend Druckmittel aus der zumindest teilweise entleerten Druckmittelquelle 9 über das Steuerventil 6, das Wechselventil 8 sowie das Bremsventil 10 in den Bremszylinder 14 geleitet, um den Deaktivierungsdruck in dem Bremszylinder 14 aufzubauen und die Parksperre 24 zu deaktivieren. Um den Druck innerhalb des Bremszylinders 14 zu erfassen, weist das Bremssystem 1 in dem gezeigten Ausführungsbeispiel einen Drucksensor 15 auf. Der Drucksensor 15 misst einen Leitungsdruck innerhalb einer Bremszylinderleitung 37, welche das Bremsventil 10 mit dem Bremszylinder 14 verbindet. Die Prozessoreinheit 16 greift auf den von dem Drucksensor 15 gemessenen Leitungsdruck zu und kann sich wie vorstehend beschrieben abschalten, wenn der Leitungsdruck während der Befüllung des Bremszylinders 14 (also während einer der vorstehend beschriebenen Öffnungszyklen 35) den vorgegebenen Grenzwert nicht länger erreicht.

Es soll weiterhin verhindert werden, dass die Druckversorgung des Bremszylinders 14 und der Anhängerbremse 3 während der Fahrt des Kraftfahrzeugs 2 sowie des Anhängefahrzeugs 4 ausfällt und die Räder 13 des Kraftfahrzeugs 2 oder des Anhängefahrzeugs 4 festgesetzt werden. Diese Druckversorgungsfunktion wird in einem Normalbetrieb des Bremssystems 1 durch die elektronische Steuerungseinheit 16 des Bremssystems 1 gesteuert. Dazu ist die elektronische Steuerungseinheit 16 des Bremssystems 1 über jeweils eine elektronische Steuerungsleitung 20 mit dem Steuerventil 6 und mit dem Redundanzventil 7 verbunden. Wenn die elektronische Steuerungseinheit 16 des Bremssystems 1 die ersten Elektromagnete EM1 des Steuerventils 6 und des Redundanzventils 7 über die elektronischen Steuerleitungen 20 bestromt, dann werden die Ventilschieber 12 des Steuerventils 6 und des Redundanzventils 7 entgegen der Federvorspannung aus der geschlossenen Schaltstellung in die geöffnete Schaltstellung verschoben.

Wenn jedoch die elektronische Steuerungseinheit 16 des Bremssystems 1 in einem Fehlerbetrieb nicht ordnungsgemäß funktioniert (inaktiver Zustand der elektronischen Steuerungseinheit 16), dann wird diese Funktion durch eine im Folgenden näher beschriebene elektronische Verriegelungseinheit 26 gesteuert, der in dem Ausführungsbeispiel nach Fig. 1 in die elektronische Steuerungseinheit 16 integriert ist. Das Steuerventil 6 begibt sich durch die mechanische Vorspannung in den geschlossenen Zustand, wenn sich die elektronische Steuerungseinheit 16 in dem inaktiven Zustand befindet. Somit wird kein Druckmittel aus der Druckmittelquelle 16 über das Steuerventil in Richtung des Bremsventils 24 geleitet. Dementsprechend wird auch kein Druckmittel über das Steuerventil 6 und das Bremsventil 7 in den Bremszylinder 14 geleitet, um darin den Deaktivierungsdruck aufzubauen, sodass die Parksperre 24 deaktiviert wird. Um dem entgegenzuwirken, steuert die elektronische Verriegelungseinheit 26, wenn sich die elektronische Steuerungseinheit 16 in dem inaktiven Zustand befindet, das Redundanzventil 7 derart, dass das Redundanzventil 7 in den geöffneten Zustand versetzt wird. Dadurch wird Druckmittel aus der Druckmittelquelle 9 über das Redundanzventil 7 und das in dem geöffneten Zustand mechanisch vorgespannte Bremsventil 10 in den Bremszylinder 14 geleitet und baut in dem Bremszylinder 14 den Deaktivierungsdruck auf, sodass die Parksperre 24 deaktiviert wird.

Um diese Funktionalität umzusetzen, speichert die elektronische Verriegelungseinheit 26 ein Normalbetrieb-Steuerungssignal 38. Dieses Normalbetrieb-Steuerungssignal 38 enthält bzw. beschreibt einen letzten gültigen Betriebszustand des Steuerventils 6, bevor die elektronische Steuerungseinheit 16 inaktiv geworden ist. Der letzte gültige Betriebszustand des Steuerventils 6 enthält insbesondere die Information, dass das Steuerventil 6 sich in dem geöffneten Zustand befindet. Wenn sich die elektronische Steuerungseinheit 16 in dem inaktiven Zustand befindet, dann steuert die elektronische Verriegelungseinheit 26 den ersten Elektromagneten EM1 des Redundanzventils 7 basierend auf dem Normalbetrieb-Steuerungssignal 38 derart, dass der Ventilschieber 12 des Redundanzventils 7 in die geöffnete Stellung verschoben wird. Wenn sich das Redundanzventil 7 somit in dem geöffneten Zustand befindet, dann wird Druckmittel aus der Druckmittelquelle 9 über das Redundanzventil 7, das Wechselventil 8 und das in dem geöffneten Zustand mechanisch vorgespannte Bremsventil 10 in den Bremszylinder 14 geleitet und baut dort den Deaktivierungsdruck auf, sodass die Parksperre 24 deaktiviert wird.

Wenn die elektronische Steuerungseinheit 16 ausgefallen ist, kann der Fahrer das Kraftfahrzeug 2 zum Stillstand bringen, indem er die Betriebsbremse betätigt. Die Parksperre 24 kann der Fahrer anschließend von seinem Fahrersitz aus betätigen, indem er die Zündung des Kraftfahrzeugs 2 ausschaltet. Die Funktion der elektronischen Verriegelungseinheit 26 kann dabei von einem Status der Zündung abhängig sein, wobei die elektronische Verriegelungseinheit 26 prüfen kann, ob Strom durch einen entsprechender Pin ("TRM15") an der elektronischen Steuerungseinheit 18 des Kraftfahrzeugs 2 fließt oder nicht. Wenn die elektronische Verriegelungseinheit 26 feststellt, dass die Zündung des Kraftfahrzeugs 2 ausgeschaltet ist, dann kann sie das Redundanzventil 7 deaktivieren, sodass sich das Redundanzventil 7 in den geschlossenen Zustand begibt. Wenn sich das Redundanzventil 7 in dem geschlossenen Zustand befindet, dann entweicht der Druck aus dem Bremszylinder 14 über das in dem geöffneten Zustand vorgespannte Bremsventil 10 zurück zum nun deaktivierten Redundanzventil 7 in den drucklosen Tank T. Die Geschwindigkeit der Aktivierung der Parksperre 24 kann begrenzt werden, indem der Durchfluss von dem Redundanzventil 7, das als Proportionalventil ausgeführt ist, zum drucklosen Tank T absichtlich eingeschränkt wird. Dies kann erfolgen, indem die elektronische Verriegelungseinheit 26 den Elektromagneten EM1 des Redundanzventils 7 entsprechend bestromt. Auf diese Weise kann ein potenzieller Fehlgebrauch durch den Fahrer, der während der Fahrt einen Zündzyklus durchführt, während eine rote Warnlampe leuchtet, eingedämmt werden.

### Bezugszeichen

- A1: Druckmittelquellen-Anschluss
- A2: Tank-Anschluss
- A3: Bremszylinder-Anschluss
- EM1: Elektromagnet Steuerventil/Redundanzventil
- EM2: Elektromagnet Bremsventil
- t₁: erster Zeitpunkt
- t₂: zweiter Zeitpunkt
- t₃: dritter Zeitpunkt
- t₄: vierter Zeitpunkt
- t₅: fünfter Zeitpunkt
- T: druckloser Tank

- 1: Bremssystem
- 2: Kraftfahrzeug
- 3: Anhängerbremse
- 4: Anhängefahrzeug
- 5: Feststellbremsmodul
- 6: Steuerventil
- 7: Redundanzventil
- 8: Wechselventil
- 8.1: erster Eingang Wechselventil
- 8.2: zweiter Eingang Wechselventil
- 8.3: Ausgang Wechselventil
- 9: Druckmittelquelle
- 10: Bremsventil
- 11: Versorgungsleitung
- 12: Ventilschieber
- 13: Rad
- 14: Bremszylinder
- 15: Drucksensor
- 16: elektronische Steuerungseinheit des Bremssystems
- 17: CAN BUS
- 18: elektronische Steuerungseinheit des Kraftfahrzeugs
- 19: Mensch-Maschine-Schnittstelle
- 20: elektronische Steuerungsleitung
- 21: Ventilgehäuse
- 22: Ventilschieber
- 23: Federelement
- 24: Parksperre
- 25: Kolbenstange
- 26: elektronische Verriegelungseinheit
- 27: Federelement
- 28: zeitlicher Verlauf des Zustands des Steuerventils
- 29: zeitlicher Verlauf des Zustands des Redundanzventils
- 30: zeitlicher Verlauf des Zustands des Bremsventils
- 31: zeitlicher Verlauf Bremszylinderdruck
- 32: Grenzwertdruck
- 33: zeitlicher Verlauf Ausgabedruck Druckmittelquelle
- 34.1: Federelement Steuerventil
- 34.2: Federelement Redundanzventil
- 35: Öffnungszyklus
- 36: Schließzyklus
- 37: Bremszylinderleitung
- 38: Normalbetrieb-Steuerungssignal

## Patentansprüche

1. Bremssystem (1) für ein Kraftfahrzeug (2), das Bremssystem (1) umfassend
- ein als Steuerventil (6) ausgebildetes erstes Wegeventil,
- ein als Redundanzventil (7) ausgebildetes zweites Wegeventil,
- ein als Bremsventil (10) ausgebildetes drittes Wegeventil,
- einen Bremszylinder (14),
- eine Druckmittelquelle (9),
- eine elektronische Steuerungseinheit (16),
- eine Parksperre (24) und
- einen drucklosen Tank (T),
wobei
- das Steuerventil (6) und das Redundanzventil (7) in einem geschlossenen Zustand mechanisch vorgespannt sind,
- das Bremsventil (10) in einem geöffneten Zustand mechanisch vorgespannt ist, und
- die elektronische Steuerungseinheit (16) dazu eingerichtet ist,
- das Steuerventil (6) und das Redundanzventil (7) derart zu steuern, dass sie sich entgegen der mechanischen Vorspannung in einen geöffneten Zustand begeben, wodurch Druckmittel aus der Druckmittelquelle (9) über das Steuerventil (6) und das Redundanzventil (7) sowie stromabwärts über das in dem geöffneten Zustand mechanisch vorgespannte Bremsventil (10) in den Bremszylinder (14) geleitet wird und in dem Bremszylinder (14) einen Deaktivierungsdruck aufbaut, sodass die Parksperre (24) deaktiviert wird, und
- das Bremsventil (10) derart zu steuern, dass es sich in einen geschlossenen Zustand begibt, sodass Druckmittel aus dem Bremszylinder (14) über das Bremsventil (10) direkt in den drucklosen Tank (T) abfließt und kein Druckmittel über das Steuerventil (6) oder das Redundanzventil (7) sowie das Bremsventil (10) in den Bremszylinder (14) geleitet wird, wenn das Steuerventil (6) oder das Redundanzventil (7) aufgrund eines mechanischen Defekts in dem geöffneten Zustand verharrt, obwohl es sich in dem geschlossenen Zustand befinden sollte.

2. Bremssystem (1) nach Anspruch 1, wobei, wenn eine Zündung des Kraftfahrzeugs (2) ausgeschaltet ist, die elektronische Steuerungseinheit (16) dazu eingerichtet ist, das Bremsventil (10) derart zu steuern, dass es sich abwechselnd in den geöffneten Zustand und in den geschlossenen Zustand begibt, sodass der Bremszylinder (14) abwechselnd gefüllt und entleert wird, bis die Druckmittelquelle (9) derart entleert ist, dass der Druck innerhalb des Bremszylinders (14) während seiner Befüllung nicht länger einen festgelegten Grenzwertdruck (32) erreicht.

3. Bremssystem (1) nach Anspruch 2, wobei die elektronische Steuerungseinheit (16) dazu eingerichtet ist, sich abzuschalten, wenn der Druck innerhalb des Bremszylinders (14) während seiner Befüllung nicht länger den Grenzwertdruck (32) erreicht.

4. Bremssystem (1) nach Anspruch 2 oder 3, das Bremssystem (1) ferner umfassend einen Drucksensor (15), wobei
- der Drucksensor (15) dazu eingerichtet ist, einen Leitungsdruck innerhalb einer Leitung (37) zu messen, welche das Bremsventil (10) mit dem Bremszylinder (14) verbindet, und
- die Prozessoreinheit (16) dazu eingerichtet ist, auf den von dem Drucksensor (15) gemessenen Leitungsdruck zuzugreifen und sich abzuschalten, wenn der Leitungsdruck während der Befüllung (35) des Bremszylinders (14) den vorgegebenen Grenzwert (32) nicht länger erreicht.

5. Bremssystem (1) nach einem der vorstehenden Ansprüche, das Bremssystem (1) weiterhin umfassend eine elektronische Verriegelungseinheit (26), wobei
- das Steuerventil (6) sich durch die mechanische Vorspannung in den geschlossenen Zustand begibt, wenn sich die elektronische Steuerungseinheit (16) in einem inaktiven Zustand befindet, sodass kein Druckmittel aus der Druckmittelquelle (9) über das Steuerventil (6) in Richtung des Bremsventils (10) geleitet wird, und
- die elektronische Verriegelungseinheit (26), wenn sich die elektronische Steuerungseinheit (16) in dem inaktiven Zustand befindet, dazu eingerichtet ist, das Redundanzventil (7) derart zu steuern, dass das Redundanzventil (7) in den geöffneten Zustand versetzt wird, wodurch Druckmittel aus der Druckmittelquelle (9) über das Redundanzventil (7) und das in dem geöffneten Zustand mechanisch vorgespannte Bremsventil (10) in den Bremszylinder (14) geleitet wird und in dem Bremszylinder (14) den Deaktivierungsdruck aufbaut, sodass die Parksperre (24) deaktiviert wird.

6. Bremssystem (1) nach Anspruch 5, wobei die elektronische Verriegelungseinheit (26) dazu eingerichtet ist,
- ein Normalbetrieb-Steuerungssignal (38) zu speichern, welches einen letzten gültigen Betriebszustand des Steuerventils (6) enthält, bevor der Zustand der elektronischen Steuerungseinheit (16) inaktiv geworden ist, und
- das Redundanzventil (7), wenn sich die elektronische Steuerungseinheit (16) in dem inaktiven Zustand befindet, basierend auf dem Normalbetrieb-Steuerungssignal (38) derart zu steuern, dass das Redundanzventil (7) in den geöffneten Zustand versetzt wird.

7. Bremssystem (1) nach einem der vorstehenden Ansprüche, 5 oder 6, wobei die Verriegelungseinheit (26) dazu eingerichtet ist, das Redundanzventil (7) derart zu steuern, dass das Redundanzventil (7) in den geschlossenen Zustand versetzt wird, wenn sich die elektronische Steuerungseinheit (16) in dem inaktiven Zustand befindet und wenn die Zündung des Kraftfahrzeugs (2) ausgeschaltet ist, sodass kein Druckmittel aus der Druckmittelquelle (9) über das Redundanzventil (7) in Richtung des Bremsventils (14) geleitet wird, sondern stattdessen Druckmittel aus dem wenigstens einen Bremszylinder (14) über das Bremsventil (10) und das Redundanzventil (7) in den drucklosen Tank (T) abgelassen wird, sodass der Deaktivierungsdruck innerhalb des wenigstens einen Bremszylinders (14) abgebaut und die Parksperre (24) aktiviert wird.

8. Bremssystem (1) nach Anspruch 7, wobei die elektronische Verriegelungseinheit (26) dazu eingerichtet ist, das Redundanzventil (7) derart zu steuern, dass ein Volumenstrom Druckmittel, der über das Redundanzventil (7) in den drucklosen Tank (T) abgelassen wird, eingeschränkt wird, wenn das Redundanzventil (7) in den geschlossenen Zustand versetzt wird.

9. Bremssystem (1) nach einem der vorstehenden Ansprüche, wobei die elektronische Steuerungseinheit (16) dazu eingerichtet ist,
- das Steuerventil (6) und das Redundanzventil (7) in den geöffneten Zustand zu versetzen, und
- das Bremsventil (10) derart zu steuern, dass genügend Druckmittel, das aus der Druckmittelquelle (9) über das Steuerventil (6) und das Redundanzventil (7) zu dem Bremsventil (10) geleitet worden ist, über das Bremsventil (10) in den Bremszylinder (14) gelangt und dort einen Sekundärbremsdruck aufbaut, der dazu führt, dass die Parksperre (24) eine vorgesehene Sekundärbremskraft erzeugt, und
- das Bremsventil (10) in den geschlossenen Zustand zu versetzen, wenn die Sekundärbremskraft nicht länger erzeugt werden soll.

10. Bremssystem (1) nach einem der vorstehenden Ansprüche, wobei die elektronische Steuerungseinheit (16) dazu eingerichtet ist,
- das Steuerventil (6) und das Redundanzventil (7) derart zu steuern, dass sie sich in den geschlossenen Zustand begeben, und
- das Bremsventil (10) in den geöffneten Zustand zu versetzen, wenn sich die elektronische Steuerungseinheit (16) in dem aktiven Zustand befindet,
wodurch Druckmittel aus dem Bremszylinder (14) über das Bremsventil (10) sowie über das Steuerventil (6) und das Redundanzventil (7) in den drucklosen Tank (T) abgelassen wird, sodass der Deaktivierungsdruck innerhalb des Bremszylinders (14) abgebaut und die Parksperre (24) aktiviert wird.

## Claims

1. Brake system (1) for a motor vehicle (2), the braking system (1) comprising
- a first directional valve designed as a control valve (6),
- a second directional valve designed as a redundancy valve (7),
- a third directional valve designed as a brake valve (10),
- a brake cylinder (14),
- a pressure medium source (9),
- an electronic control unit (16),
- a parking lock (24), and
- a pressureless tank (T),
wherein
- the control valve (6) and the redundancy valve (7) are mechanically preloaded in a closed state,
- the brake valve (10) is mechanically preloaded in an open state, and
- the electronic control unit (16) is configured
- to control the control valve (6) and the redundancy valve (7) in such a way that they move into an open state, counter to the mechanical preload, whereby pressure medium from the pressure medium source (9) is directed via the control valve (6) and the redundancy valve (7) as well as downstream via the brake valve (10), which is mechanically preloaded in the open state, into the brake cylinder (14) and builds up a deactivation pressure in the brake cylinder (14) such that the parking lock (24) is deactivated, and
- to control the brake valve (10) in such a way that it moves into a closed state, such that pressure medium from the brake cylinder (14) flows directly into the pressureless tank (T) via the brake valve (10) and no pressure medium is directed via the control valve (6) or the redundancy valve (7) as well as the brake valve (10) into the brake cylinder (14) if the control valve (6) or the redundancy valve (7) remains in the open state due to a mechanical defect, although it should be in the closed state.

2. Brake system (1) according to Claim 1, wherein, when an ignition of the motor vehicle (2) is switched off, the electronic control unit (16) is configured to control the brake valve (10) in such a way that it alternately moves into the open state and into the closed state, such that the brake cylinder (14) is alternately filled and emptied, until the pressure medium source (9) is emptied in such a way that the pressure inside the brake cylinder (14) no longer reaches a specified limit value pressure (32) during its filling.

3. Brake system (1) according to Claim 2, wherein the electronic control unit (16) is configured to switch off when the pressure inside the brake cylinder (14) no longer reaches the limit value pressure (32) during its filling.

4. Brake system (1) according to Claim 2 or 3, the brake system (1) further comprising a pressure sensor (15), wherein
- the pressure sensor (15) is configured to measure a line pressure within a line (37) connecting the brake valve (10) to the brake cylinder (14), and
- the processor unit (16) is configured to access the line pressure measured by the pressure sensor (15) and to switch off when the line pressure no longer reaches the specified limit value (32) during the filling (35) of the brake cylinder (14).

5. Brake system (1) according to any one of the preceding claims, the brake system (1) further comprising an electronic locking unit (26), wherein
- the control valve (6) is moved into the closed state by the mechanical preload when the electronic control unit (16) is in an inactive state, such that no pressure medium from the pressure medium source (9) is directed via the control valve (6) in the direction of the brake valve (10), and
- the electronic locking unit (26), when the electronic control unit (16) is in the inactive state, is configured to control the redundancy valve (7) in such a way that the redundancy valve (7) is moved into the open state, whereby pressure medium from the pressure medium source (9) is directed via the redundancy valve (7) and the brake valve (10), which is mechanically preloaded in the open state, into the brake cylinder (14) and builds up the deactivation pressure in the brake cylinder (14), such that the parking lock (24) is deactivated.

6. Brake system (1) according to Claim 5, wherein the electronic locking unit (26) is configured
- to store a normal operation control signal (38) containing a last valid operating state of the control valve (6) before the state of the electronic control unit (16) has become inactive, and
- to control the redundancy valve (7), when the electronic control unit (16) is in the inactive state, based on the normal operation control signal (38) in such a way that the redundancy valve (7) is moved into the open state.

7. Brake system (1) according to either of the preceding Claims, 5 or 6, wherein the locking unit (26) is configured to control the redundancy valve (7) in such a way that the redundancy valve (7) is moved into the closed state when the electronic control unit (16) is in the inactive state and when the ignition of the motor vehicle (2) is switched off, such that no pressure medium from the pressure medium source (9) is directed via the redundancy valve (7) in the direction of the brake valve (14), but rather pressure medium is discharged from the at least one brake cylinder (14) via the brake valve (10) and the redundancy valve (7) into the pressureless tank (T), such that the deactivation pressure within the at least one brake cylinder (14) is released and the parking lock (24) is activated.

8. Brake system (1) according to Claim 7, wherein the electronic locking unit (26) is configured to control the redundancy valve (7) in such a way that a volume flow of pressure medium, which is discharged via the redundancy valve (7) into the pressureless tank (T), is restricted when the redundancy valve (7) is moved into the closed state.

9. Brake system (1) according to any one of the preceding claims, wherein the electronic control unit (16) is configured
- to move the control valve (6) and the redundancy valve (7) into the open state, and
- to control the brake valve (10) in such a way that sufficient pressure medium, which has been directed from the pressure medium source (9) via the control valve (6) and the redundancy valve (7) to the brake valve (10), enters the brake cylinder (14) via the brake valve (10) and builds up a secondary brake pressure there, which leads to the parking lock (24) generating a provided secondary braking force, and
- to move the brake valve (10) into the closed state if the secondary braking force is no longer to be generated.

10. Brake system (1) according to any one of the preceding claims, wherein the electronic control unit (16) is configured
- to control the control valve (6) and the redundancy valve (7) in such a way that they are moved into the closed state, and
- to move the brake valve (10) into the open state when the electronic control unit (16) is in the active state,
whereby pressure medium from the brake cylinder (14) is discharged via the brake valve (10) and via the control valve (6) and the redundancy valve (7) into the pressureless tank (T), such that the deactivation pressure inside the brake cylinder (14) is released and the parking lock (24) is activated.

## Revendications

1. Système de freinage (1) pour un véhicule à moteur (2), le système de freinage (1) comprenant
- un premier distributeur formé comme une valve de commande (6),
- un deuxième distributeur formé comme une valve de redondance (7),
- un troisième distributeur formé comme une valve de frein (10),
- un cylindre de frein (14),
- une source (9) de fluide sous pression,
- une unité de commande électronique (16),
- un frein de stationnement (24) et
- un réservoir sans pression (T),
- la valve de commande (6) et la valve de redondance (7) étant précontraintes mécaniquement dans un état fermé,
- la valve de frein (10) étant précontrainte mécaniquement dans un état ouvert, et
- l'unité de commande électronique (16) étant mise au point pour
- commander la valve de commande (6) et la valve de redondance (7) de telle manière qu'elles se déplacent dans un état ouvert à l'encontre de la précontrainte mécanique, ce qui permet d'acheminer un fluide sous pression depuis la source (9) de fluide sous pression par la valve de commande (6) et la valve de redondance (7) et en aval par la valve de frein (10) précontrainte mécaniquement dans l'état ouvert dans le cylindre de frein (14) et d'établir dans le cylindre de frein (14) une pression de désactivation de manière à désactiver le frein de stationnement (24), et
- commander la valve de frein (10) de telle manière qu'elle se déplace dans un état fermé si bien que du fluide sous pression provenant du cylindre de frein (14) s'écoule directement dans le réservoir sans pression (T) par la valve de frein (10) et qu'aucun fluide sous pression n'est acheminé dans le cylindre de frein (14) par la valve de commande (6) ou de la valve de redondance (7) et de la valve de frein (10) lorsque la valve de commande (6) ou la valve de redondance (7) reste dans l'état ouvert en raison d'un défaut mécanique, bien qu'elle soit censée se trouver dans l'état fermé.

2. Système de freinage (1) selon la revendication 1, l'unité de commande électronique (16) étant adaptée, lorsqu'un allumage du véhicule à moteur (2) est coupé, pour commander la valve de frein (10) de telle manière qu'elle se déplace alternativement dans l'état ouvert et dans l'état fermé, si bien que le cylindre de frein (14) est alternativement rempli et vidé, jusqu'à ce que la source (9) de fluide sous pression soit vidée de telle manière que la pression à l'intérieur du cylindre de frein (14) n'atteigne plus une valeur limite de pression (32) fixée pendant son remplissage.

3. Système de freinage (1) selon la revendication 2, l'unité de commande électronique (16) étant mise au point pour s'arrêter lorsque la pression à l'intérieur du cylindre de frein (14) n'atteint plus la valeur limite de pression (32) pendant son remplissage.

4. Système de freinage (1) selon la revendication 2 ou 3, le système de freinage (1) comprenant en outre un capteur de pression (15),
- le capteur de pression (15) étant mis au point pour mesurer une pression de conduite dans une conduite (37), laquelle relie la valve de frein (10) au cylindre de frein (14), et
- l'unité de traitement (16) étant mise au point pour accéder à la pression de conduite mesurée par le capteur de pression (15) et pour s'arrêter lorsque la pression de conduite n'atteint plus la valeur limite (32) spécifiée pendant le remplissage (35) du cylindre de frein (14).

5. Système de freinage (1) selon l'une des revendications précédentes, le système de freinage (1) comprenant par ailleurs une unité de verrouillage électronique (26),
- la valve de commande (6) se déplaçant dans l'état fermé par la précontrainte mécanique lorsque l'unité de commande électronique (16) se trouve dans un état inactif si bien qu'aucun fluide sous pression n'est acheminé depuis la source (9) de fluide sous pression par la valve de commande (6) en direction de la valve de frein (10), et
- l'unité de verrouillage électronique (26), lorsque l'unité de commande électronique (16) se trouve dans l'état inactif, étant mise au point pour commander la valve de redondance (7) de telle manière que la valve de redondance (7) est amenée dans l'état ouvert de qui permet d'acheminer du fluide sous pression depuis la source (9) de fluide sous pression par la valve de redondance (7) et la valve de frein (10) précontrainte mécaniquement dans l'état ouvert dans le cylindre de frein (14) et d'établir la pression de désactivation dans le cylindre de frein (14) si bien que le frein de stationnement (24) est désactivé.

6. Système de freinage (1) selon la revendication 5, l'unité de verrouillage électronique (26) étant mise au point pour
- stocker un signal de commande (38) de fonctionnement normal qui contient un dernier état de fonctionnement valide de la valve de commande (6) avant que l'état de l'unité de commande électronique (16) ne soit devenu inactif, et
- commander la valve de redondance (7), lorsque l'unité de commande électronique (16) se trouve dans l'état inactif, sur la base du signal de commande (38) de fonctionnement normal de telle manière que la valve de redondance (7) est amenée dans l'état ouvert.

7. Système de freinage (1) selon l'une des revendications précédentes 5 ou 6, l'unité de verrouillage (26) étant mise au point pour commander la valve de redondance (7) de telle manière que la valve de redondance (7) est amenée dans l'état fermé, lorsque l'unité de commande électronique (16) se trouve dans l'état inactif et lorsque l'allumage du véhicule à moteur (2) est coupé, si bien qu'aucun fluide sous pression n'est acheminé depuis la source (9) de fluide sous pression par la valve de redondance (7) en direction de la valve de frein (14), et qu'en lieu et place du fluide sous pression est évacué de l'au moins un cylindre de frein (14) par la valve de frein (10) et la valve de redondance (7) dans le réservoir sans pression (T) si bien que la pression de désactivation dans l'au moins un cylindre de frein (14) est relâchée et que le frein de stationnement (24) est activé.

8. Système de freinage (1) selon la revendication 7, l'unité de verrouillage électronique (26) étant mise au point pour commander la valve de redondance (7) de telle manière qu'un débit volumique de fluide sous pression, qui est évacué par la valve de redondance (7) dans le réservoir sans pression (T), est limité lorsque la valve de redondance (7) est amenée dans l'état fermé.

9. Système de freinage (1) selon l'une des revendications précédentes, l'unité de commande électronique (16) étant mise au point pour
- amener la valve de commande (6) et la valve de redondance (7) dans l'état ouvert, et
- commander la valve de frein (10) de telle manière qu'un fluide sous pression suffisant, qui a été acheminé depuis la source (9) de fluide sous pression par la valve de commande (6) et la valve de redondance (7) vers la valve de frein (10), parvient dans le cylindre de frein (14) par la valve de frein (10) et y établit une pression de freinage secondaire qui a pour effet que le frein de stationnement (24) génère une force de freinage secondaire prévue, et
- amener la valve de frein (10) dans la position fermée lorsque la force de freinage secondaire ne doit plus être générée.

10. Système de freinage (1) selon l'une des revendications précédentes, l'unité de commande électronique (16) étant mise au point pour
- commander la valve de commande (6) et la valve de redondance (7) de telle manière qu'elles se déplacent dans l'état fermé, et
- amener la valve de frein (10) dans l'état ouvert lorsque l'unité de commande électronique (16) se trouve dans l'état actif,
ce qui permet d'évacuer du fluide sous pression depuis le cylindre de frein (14) par la valve de frein (10) et par la valve de commande (6) et la valve de redondance (7) dans le réservoir sans pression (T), si bien que la pression de désactivation à l'intérieur du cylindre de frein (14) est relâchée et que le frein de stationnement (24) est activé.
